# DEMANDE DE BREVET EUROPEEN

(11) **EP 1 170 930 A1**
(43) Date de publication de la demande: **09.01.2002**
(21) Numéro de dépôt: 01401563.0
(22) Date de dépôt: 14.06.2001
(51) Int. Cl.: H04M 1/22, H04M 1/57

(54) **Dispositif et procédé pour moduler le rétroéclairage d'un appareil électronique autonome**

(30) Priorité: 06.07.2000 FR 0008840
(71) Demandeur: SAGEM S.A., 75015 Paris (FR)
(72) Inventeur: Gresse, Philippe, 95490 Vaureal (FR)
(74) Mandataire: Schmit, Christian Norbert Marie

(57) **Abrégé**

On module une source (103) lumineuse d'un appareil (101) électronique en fonction de stimuli extérieurs, ou internes, à cet appareil. La source lumineuse est du type trois couleurs (rouge, vert et bleu). On associe un stimulus et une modulation lumineuse via une mémoire (109, 112). Une modulation peut être une simple couleur, une succession de couleurs, ou un clignotement éventuellement multicolore. Les stimuli les plus fréquents sont des appels entrants pour un téléphone mobile, ou la connexion d'un appareil périphérique à l'appareil électronique. Il est possible d'associer une modulation colorée, par exemple, à l'origine d'un appel, à la nature d'un appel, au contenu d'un message, à la nature d'un appareil périphérique.

## Description

La présente invention a pour objet un dispositif et un procédé pour moduler le rétroéclairage d'un appareil autonome. Le domaine de l'invention est celui des appareils comportant des éléments, par exemple un écran ou un clavier, pouvant être rétroéclairé. Parmi ces appareils on peut par exemple citer les téléphones mobiles, les téléphones sans fil et les assistants personnels électroniques (ou PDA). Cette liste n'est pas limitative. Un premier but de l'invention est de permettre à un utilisateur d'un tel appareil d'avoir un vaste choix parmi le choix des couleurs qu'il peut utiliser pour le rétroéclairage. Un deuxième but de l'invention est de permettre à l'utilisateur d'un tel appareil d'associer une modulation du rétroéclairage à un événement donné.

Dans l'état de la technique on connaît, par exemple, des téléphones mobiles qui comportent un dispositif de rétroéclairage. De tels téléphones mobiles sont équipés de ce dispositif de rétroéclairage pour que l'écran soit toujours visible même en condition de faible luminosité. Ainsi ce dispositif de rétroéclairage peut être composé de multiples LED monochromatiques disposées tout autour de l'écran afin d'éclairer celui-ci. Dans une variante ce dispositif est composé de LED, source de lumière, ainsi que d'un guide de lumière qui répartit la lumière produite par la source de lumière sur toute la surface de l'écran. Ainsi lorsqu'un utilisateur utilise un tel téléphone mobile en condition de faible luminosité il est toujours en mesure de lire ce qui est affiché sur l'écran du téléphone. Pour cette raison ce dispositif est activé par l'utilisateur lorsque celui-ci se sert de son téléphone. En général cette activation se fait lors de l'enfoncement d'une touche par l'utilisateur. C'est donc à l'utilisateur d'activer le dispositif de rétroéclairage.

Dans l'état de la technique il existe aussi une variante du précédent téléphone. En effet il est possible que la source lumineuse soit constituée par une diode capable de produire deux couleurs. Dans ce cas l'utilisateur choisit quelle sera la couleur qu'il va utiliser pour le rétroéclairage de son appareil. Une fois que cette couleur est choisie, c'est celle qui sera produite par la source lumineuse à chaque fois que le rétroéclairage sera activé. Dans ce cas la couleur du rétroéclairage ne fournit aucune information exploitable sur l'état ou le fonctionnement du téléphone mobile. Dans cette variante le rétroéclairage est ainsi activé par une action directe de l'utilisateur sur le téléphone mobile.

Dans l'état de la technique on connaît aussi les téléphones mobiles qui permettent de choisir une sonnerie différente en fonction de la personne à l'origine d'un appel entrant sur ledit téléphone. Ainsi le son de la sonnerie est porteur de sens. Cependant un tel système n'est pas utilisable dans un contexte où une certaine discrétion est de rigueur. Dans ce cas on a recours à un téléphone mobile qui peut fonctionner selon un mode vibreur. Dans ce mode le téléphone mobile vibre lorsqu'il y a un appel entrant. Il n'y a pas différents modes de vibration, le téléphone vibre ou ne vibre pas. Lorsque l'utilisateur du téléphone souhaite être discret, il perd donc l'information sur la personne qui l'appelle. Il est bien sûr possible d'afficher le numéro de la personne appelant sur l'écran mais dans ce cas il faut que l'utilisateur du téléphone mobile fasse un effort de lecture portant sur dix chiffres. De plus si l'on se place dans un contexte de réunion où le téléphone mobile est posé sur une table, le mode vibreur n'est pas exempt de certains inconvénients sonores. En effet en général la vibration est d'une intensité suffisante pour que, le téléphone étant posé sur une table, elle produise un bruit provoquant une gêne au moins comparable à celle d'une sonnerie.

De plus si l'on considère le cas d'un mal entendant, le dispositif permettant d'associer une sonnerie à l'origine d'un appel ne lui sera pas d'une grande utilité. En effet il n'entendra pas la sonnerie ou la percevra à peine et ne sera en tout état de cause pas capable de faire la différence entre plusieurs sonneries.

L'invention résout ces problèmes en utilisant une source lumineuse qui permet de créer de grandes quantités de lumière ayant des longueurs d'ondes réparties dans le spectre lumineux visible par l'homme. Cette source lumineuse, par exemple du type rouge-vert-bleu, peut être paramétrée par l'utilisateur. Chaque paramétrage peut alors être associé à un événement extérieur. Par évènement extérieur, on entend par exemple un appel entrant. Les possibilités d'association entre des évènements et une couleur, ou une séquence de couleurs, sont multiples. Par exemple. on peut citer l'association d'une couleur et de l'origine de l'appel, l'association d'une couleur et la priorité d'un appel mais il est aussi possible d'associer une couleur à un mode de fonctionnement d'un téléphone, ou à un périphérique qui serait connecté à ce téléphone. De même dans l'association on n'est pas limité à une seule couleur. Ainsi dans l'invention un événement peut être associé à une succession de couleurs. Ces couleurs se succèdent alors dans le temps pour signaler à l'utilisateur de l'appareil que l'événement a eu lieu ou est en cours. De tels évènements sont aussi appelés des stimuli.

Ainsi un utilisateur d'un téléphone mobile selon l'invention peut paramétrer son téléphone afin que le rétroéclairage de celui-ci clignote en rouge sur réception d'un appel urgent, en vert pour un appel qui ne l'est pas. Dans ce cas au cours d'une réunion il pourra poser son téléphone sur la table et être immédiatement averti de l'arrivée d'un appel urgent, et cela sans perturber le reste de l'assemblée.

L'invention a donc pour objet un procédé de rétro-éclairage d'un appareil électronique autonome caractérisé en ce que :
- on reçoit sur l'appareil un stimulus électrique extérieur à l'appareil,
- on module, pour avertir de la détection par l'appareil du stimulus, le rétro-éclairage, en intensité et/ou en couleur, de l'appareil en fonction de ce stimulus.

L'invention a aussi pour objet un appareil électronique autonome comportant des moyens de rétro-éclairage multicolore caractérisé en ce qu'il comporte des moyens pour moduler, en intensité et/ou en couleur, les moyens de rétro-éclairage en fonction d'un stimulus électrique extérieur à l'appareil.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration d'un dispositif selon l'invention, pouvant être utilisé pour la mise en oeuvre du procédé selon l'invention.
- Figure 2 : une illustration d'un mode d'association d'un stimulus et d'une modulation du rétroéclairage.
- Figure 3: une illustration d'un mode de réalisation d'un rétroéclairage multicolore.
- Figures 4 à 8 : une illustration d'étapes du procédé selon l'invention.

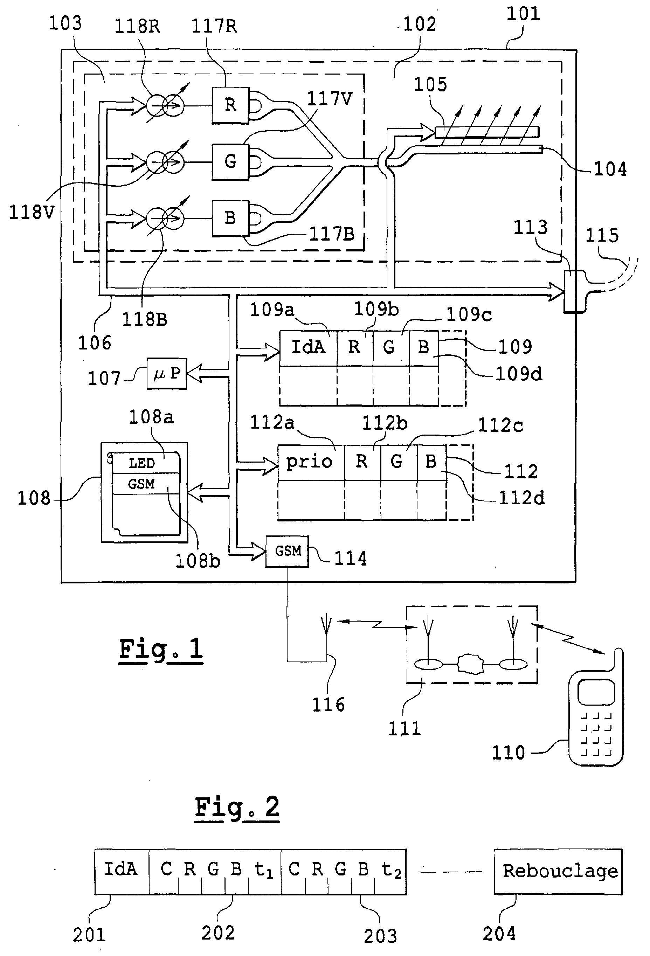

La figure 1 montre un appareil 101, dans notre exemple on considère qu'il s'agit d'un téléphone mobile. Le téléphone 101 comporte un dispositif 102 de rétroéclairage. Le dispositif 102 de rétroéclairage comporte lui-même une source 103 lumineuse et un guide 104 de lumière. Dans l'exemple de la figure 1 le guide 104 de lumière conduit l'énergie lumineuse produite par la source 103 sous un écran 101. Ce dispositif, source plus guide, permet donc de rétroéclairer un écran 105. Cette source 103 lumineuse est commandée via un bus 106. Un bus est un ensemble de fils ou de pistes comportant ces éléments en nombre suffisant pour conduire des signaux de commandes, d'adresses, de données, d'interruptions, d'horloge et d'alimentation.

Le bus 106 est aussi connecté à un microprocesseur 107 qui commande la source 103 lumineuse. Cette commande est effectuée sous le contrôle de codes-instructions enregistrés dans une mémoire 108 elle aussi connectée au bus 106.

La mémoire 108 comporte au moins deux zones. Une première zone 108a comporte des codes-instructions qui commandent le microprocesseur 107 lorsque celui-ci doit piloter la source 103 lumineuse. Une deuxième zone 108b comporte des codes-instructions qui commandent le microprocesseur 107 lorsque celui-ci effectue des tâches liées à la fonction GSM de l'appareil 101. La mémoire 108 comporte d'autres zones non représentées parmi lesquelles on peut citer une zone de travail et une zone de stockage de données.

La figure 1 montre aussi que le téléphone 101 comporte une mémoire 109 d'appelants. Un appelant est, par exemple, une personne qui utilise un téléphone 110 pour établir une connexion avec le téléphone 101 via un réseau 111 GSM. Dans l'invention on ne se limite pas à la norme GSM, il peut s'agir de toute autre norme, par exemple PCS DCS UMTS, mais aussi DECT, Blue Tooth et la liste n'est pas limitative. Dans l'exemple de la figure 1 la mémoire 109 comporte quatre colonnes. Cette mémoire est donc structurée en lignes et en colonnes. Chaque ligne correspond à un appelant, chaque colonne correspond à une information concernant un appelant. Il est possible d'utiliser de manière équivalente une autre architecture mémoire pour associer un appelant à des informations. La mémoire 109 comporte donc une première colonne 109a dans laquelle on enregistre un identifiant de l'appelant. Cela peut par exemple être le numéro de téléphone de la personne qui cherche à établir une communication avec le téléphone 101. Trois colonnes, 109b à 109d, dans lesquelles on enregistre des informations concernant un rétroéclairage de l'appareil 101 associé à l'identifiant de l'appelant. Dans l'exemple on considère qu'il faut trois colonnes car on stocke trois informations qui sont une intensité de rouge, une intensité de vert et une intensité de bleu, toutes trois utiles pour produire une couleur. La mémoire 109 est connectée au bus 106.

Le téléphone 101 comporte aussi une mémoire 112 divisée en lignes et en colonnes. Chaque ligne correspond à une priorité pour un message ou un appel entrant, chaque colonne correspondant à des informations associées à cette priorité. Une première colonne 112a comporte le niveau de priorité, les colonnes suivantes 112b à 112d comportent des informations utiles pour définir le rétroéclairage de l'appareil 101 lorsque celui-ci reçoit un appel ou un message correspondant à la priorité décrite dans la colonne 112a. La mémoire 112 est connectée au bus 106.

Le téléphone 101 peut comporter d'autres mémoires du type 109 ou 112 selon les associations qui sont envisagées entre les stimuli et les rétroéclairages. Par exemple on peut imaginer une mémoire qui comporterait un identifiant d'un appareil périphérique et des renseignements correspondant au rétroéclairage à utiliser lorsque cet appareil est connecté au téléphone 101. Comme exemple d'appareil périphérique on peut citer un kit mains-libres pour le téléphone 101. Qu'il s'agisse d'un appareil kit mains-libres ou d'un mode de fonctionnement kit mains-libres on peut associer à cet appareil ou à ce mode un rétroéclairage qui sera utilisé lorsque l'appareil est soit connecté au téléphone 101, ou lorsque le téléphone fonctionne selon le mode mains-libres.

La figure 1 montre aussi que le téléphone 101 comporte un connecteur 113 et des circuits 114 GSM, tous deux connectés au bus 106. Le connecteur 113 permet de connecter un appareil périphérique au téléphone 101. Cet appareil périphérique peut par exemple être un kit mains-libres, un appareil pour recharger une batterie du téléphone 101, ou tout autre appareil utilisé dans le domaine de la téléphonie mobile. Le connecteur 113 est représenté sous la forme d'un connecteur dans lequel vient s'enficher un connecteur associé 115, mais il peut aussi s'agir d'un connecteur hertzien par exemple d'un module Blue Tooth. Dans ce cas les appareils qui seront connectés de manière hertzienne au téléphone 101 devront eux aussi être munis de ce module Blue Tooth. Lorsqu'un appareil est connecté sur le connecteur 113 on module donc le rétroéclairage du téléphone 101 en fonction de la nature de cet appareil.

Le rôle des circuits 114 est double. Dans un premier rôle il reçoit par le bus 106 des signaux numériques qu'il va convertir en signaux analogiques à une fréquence radio, ces signaux analogiques seront alors transmis par une antenne 116 à laquelle est connecté le circuit 114. Le deuxième rôle est de recevoir, du réseau 111 GSM, des signaux analogiques via l'antenne 116 et de produire à partir de ces signaux analogiques des signaux numériques qui pourront être lus par le microprocesseur 107 via le bus 106.

Dans l'exemple de la figure 1 le dispositif 103 comporte trois diodes 117R produisant une lumière rouge, 117V produisant une lumière verte, et 117B produisant une lumière bleue. Chacune de ces diodes est connectée à une entrée d'un mélangeur optique de lumière dont la sortie est la sortie de la source 103 lumineuse. On sait en effet qu'il est possible de produire n'importe quelle couleur à partir de sources lumineuses rouge, verte et bleue commandable en intensité. Ainsi chacune des diodes 117R 117V et 117B est connectée à un générateur de courant. Ces générateurs sont les générateurs 118R, 118V et 118B qui sont connectés au bus 106. Ces générateurs 118R, 118V et 118B sont donc commandés par un microprocesseur 107 lui-même commandé par des codes-instructions de la mémoire 108a. Les champs 109b à 109d, ou 112b à 112d comportent donc des descriptions de consignes à appliquer aux générateurs 118R, 118V et 118B afin de produire une couleur à la sortie de la source 103 lumineuse. Les moyens de rétroéclairage sont donc le dispositif 102, et les moyens pour moduler ce rétroéclairage en fonction d'un stimulus sont donc entre autres le microprocesseur 107, les mémoires 109 et 112, ainsi que les générateurs 118.

La figure 2 illustre le fait qu'il est possible d'associer une séquence lumineuse à un stimulus. En effet dans la figure 2 on montre une variante d'une ligne de la table 109. Dans la variante de la figure 2 cette ligne comporte un premier champ qui est un identifiant de l'appelant. Ce premier champ 201 est suivi d'un nombre de champs variables décrivant une séquence lumineuse par exemple le champ 202 suivant le champ 201 comporte cinq informations. Une première information est une commande indiquant qu'il faut produire une couleur à l'aide du dispositif 103. Les trois informations suivantes décrivent les consignes qu'il faut appliquer au générateur 118 pour produire cette couleur, et la dernière information est une information de temps pendant laquelle il faut produire cette couleur avant de passer à la commande suivante décrite dans le champ 203. Les champs du type 202 ou 203 se succèdent, par exemple jusqu'à ce que l'on arrive sur un champ 204 de rebouclage. Le champ de rebouclage comporte un code instruction qui est une commande qui indique qu'il faut recommencer le cycle de couleurs à partir de la commande du champ 202. A la place de la commande de rebouclage on peut envisager des commandes de fin de cycle qui indiquent qu'il faut arrêter de produire la modulation lumineuse, des commandes de branchement à un endroit particulier du cycle par exemple on reprend le cycle uniquement à partir du champ 203, ou tout autre commande qui permet de décrire une séquence lumineuse. En utilisant des lignes telles que celles décrites à la figure 2 il est donc possible d'accroître les possibilités de modulation du rétroéclairage de l'appareil 101.

Les lignes telles que celles décrites à la figure 2 peuvent être de longueur variable et comporter de nombreux codes-instructions. Cependant dans une variante de l'invention on peut envisager des lignes qui ne comporteraient qu'un nombre limité de champs du type 202 Le traitement de ces champs s'effectuant systématiquement avec un rebouclage c'est-à-dire que l'utilisateur de l'appareil 101 va par exemple renseigner les trois champs de la ligne du type de celle décrite à la figure 2, et lorsque l'appelant correspondant à l'identifiant du champ 201 appellera l'appareil 101, le rétroéclairage de l'appareil se fera suivant la séquence décrite par les trois champs renseignés par l'utilisateur et ce de manière cyclique jusqu'à ce que l'utilisateur de l'appareil 101 interrompe ce cycle soit en acceptant l'appel soit en le refusant, soit de tout autre manière prévue pour interrompre le cycle.

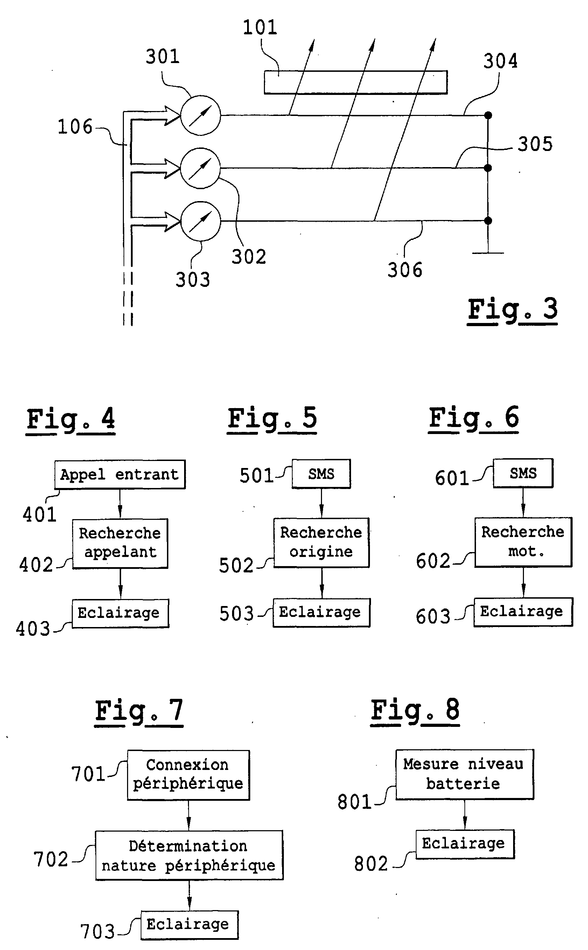

La figure 3 illustre un autre dispositif qui peut être utilisé comme source lumineuse. La figure 3 montre le bus 106 connecté à trois générateurs de tension 301 à 303. Chacun de ces générateurs de tension est connecté à un film électroluminescent 304 à 306. Les films électroluminescents sont situés sous l'écran 101. Lorsqu'ils sont stimulés par une tension ces films électroluminescents produisent de la lumière. Par exemple le film 304 produit une lumière rouge, le film 305 une lumière verte et le film 306 une lumière bleue. On obtient ainsi au final une lumière comportant trois composantes rouge verte et bleue. Il est donc ainsi possible de produire n'importe quelle couleur dans le spectre visible, cela dépendant bien sût de la résolution des générateurs 301 à 303. Ces générateurs 301 et 303 peuvent être commandés par le microprocesseur 107 via le bus 106.

Les figures 4 à 8 illustrent le comportement d'un téléphone selon l'invention face à différents stimuli. La liste des stimuli ainsi illustrés n'est pas exhaustive, il en existe d'autre par exemple une alarme, ou un rappel de rendez-vous. Dans l'invention on associe donc un stimulus à une modulation de retro-éclairage. Cette modulation est mise en oeuvre lorsque le stimulus est détecté.

La figure 4 montre une étape préliminaire dans laquelle le téléphone 101 détecte un appel entrant. Par exemple cet appel a été initié par une personne utilisant le téléphone 110. Dans un message de paging (message diffuser sur l'ensemble de la zone où est susceptible de se trouver le téléphone) le téléphone 101 va donc recevoir des informations lui indiquant qu'on cherche à établir une communication avec lui. Il s'ensuit une négociation entre le GSM et le réseau 111 pour établir une connexion entre le téléphone 110 et le téléphone 101. Cette négociation est gérée de manière connue par le microprocesseur 107 commandé par les codes instructions de la zone 108b. Au cours de cette négociation le téléphone 101 reçoit un identifiant de l'appareil qui cherche à le joindre. Dans un exemple cet identifiant est un numéro de téléphone de la personne qui cherche à entrer en communication avec le téléphone 101. Le microprocesseur 107, commandé par les codes-instructions de la zone 108a, parcourt alors la colonne 109a de la mémoire 109 à la recherche du numéro de téléphone de la personne appelante. Il s'agit de l'étape 402. Si la recherche s'avère fructueuse, c'est-à-dire si l'identifiant de la personne utilisant l'appareil 110 est enregistré dans la colonne 109a, le microprocesseur utilise alors les paramètres correspondant à la ligne de l'identifiant pour moduler le rétroéclairage du téléphone 101 via la commande du dispositif 103. Il s'agit de l'étape 403.

Si la recherche est infructueuse soit le microprocesseur ne provoque pas de rétroéclairage, soit il existe un rétroéclairage par défaut qui est alors utilisé pour signifier de manière lumineuse à l'utilisateur de l'appareil 101 qu'un appel entrant est en ce moment géré par le téléphone 101.

En général la modulation du rétroéclairage s'interrompt soit lorsque l'utilisateur du téléphone 101 accepte l'appel, soit lorsqu'il rejette l'appel, soit lorsque l'utilisateur de l'appareil 110 raccroche, soit au bout d'une temporisation pré paramétrée.

La figure 5 montre une étape préliminaire 501 dans laquelle le téléphone 101 reçoit un message court (SMS). Cette réception s'effectue de manière connue et définie par les normes de téléphonie mobile. On passe alors à une étape 502 de recherche de l'origine du SMS. Dans cette étape le microprocesseur 107 commandé par des codes-instructions de la zone 108a recherche dans le SMS le champ correspondant à la personne qui a émis ce SMS. Une fois ce champ identifiant le microprocesseur 107 parcourt la colonne 109a à la recherche de cet identifiant. Suit alors une étape 503 de rétroéclairage de l'appareil 101 qui s'effectue en fonction du résultat de la recherche de manière similaire à l'étape 403.

La figure 6 montre une étape préliminaire 601 dans laquelle le téléphone 101 reçoit un message SMS. A partir de ce message, le microprocesseur 107 effectue une recherche sur certains mots qui ont été pré paramétrés par l'utilisateur. Ces mots sont en fait enregistrés dans une mémoire du type de la mémoire 109 ou 112 et sont associés à des paramètres de rétroéclairage. La recherche de ces mots se fait dans l'étape 602. Si on trouve dans le SMS un mot pré paramétré par l'utilisateur de l'appareil 101 on passe à une étape 603 de rétroéclairage. Dans cette étape le microprocesseur 107 utilise les paramétrages de rétroéclairage décrits dans la ligne correspondant au mot pour moduler le rétroéclairage de l'appareil 101. Si le SMS comporte plusieurs mots préparamétrés, on choisit par exemple le premier mot dans l'ordre de la mémoire. Cette étape 603 est donc similaire aux étapes 403 et 503.

Dans une variante des figures 4 à 6, le téléphone reçoit une demande de communication entrante, SMS ou vocale. Cette demande est associée à une information de priorité. Le rétroéclairage du téléphone 101 est alors fonction de cette priorité. Dans une variante, la priorité peut être liée à l'origine de l'appel.

La figure 7 montre une première étape 701 préliminaire de connexion à un périphérique. Dans l'étape 701 l'utilisateur du téléphone 101 connecte à ce téléphone un périphérique, par exemple un kit mains-libres. Au cours de cette connexion il y a une phase de négociation entre le téléphone et le kit mains-libres pendant laquelle ils établissent la façon dont ils vont communiquer, et se signalent l'un à l'autre. Au cours de cette négociation il y a une étape 702 de détermination de la nature du périphérique. Dans cette étape le périphérique envoie au microprocesseur 107, via le connecteur 113, un message dans lequel il s'identifie en tant que périphérique et donne sa nature. Le microprocesseur 107, commandé par les codes-instructions de la zone 108a recherche alors dans une table de périphériques si le périphérique qui vient d'être connecté sur le connecteur 113 est présent dans cette table. S'il trouve le périphérique dans cette table il va alors extraire de cette table les informations de rétroéclairage correspondant à ce périphérique. Ici on passe à une étape 703 d'éclairage de l'appareil 101. Dans cette étape le rétroéclairage mis en oeuvre par l'appareil 101 correspond au périphérique qui lui est connecté. La simple vue du rétroéclairage indique donc à l'utilisateur quel périphérique est connecté au téléphone 101. Cela est pratique, notamment dans le cas de l'utilisation d'un kit mains-libres. En effet les kits mains-libres sont de plus en plus souvent un mode de fonctionnement du téléphone mobile dans lequel il est connecté de manière hertzienne au kit. Dans ce cas il n'est pas évident pour l'utilisateur du téléphone mobile de se souvenir que le téléphone mobile est connecté au kit mains-libres. Avec l'invention il lui suffit de constater que le rétroéclairage est particulier pour se souvenir que le téléphone mobile est en fait connecté au kit mains-libres.

La figure 8 dans une étape 801 préliminaire dans lequel le microprocesseur 107 mesure le niveau d'une batterie du téléphone 101. Puis on passe à une étape 802 de rétroéclairage en fonction du niveau de la batterie. Dans l'étape 802 le microprocesseur 107 compare le niveau mesuré au niveau maximum de la batterie. Il en déduit quelle doit être la nature du rétro-éclairage de l'appareil 101. Par exemple si la batterie est pleine la lumière sera à dominante verte, si la batterie est à moitié pleine elle sera à dominante orange si elle proche d'être épuisée elle sera rouge et enfin si la rupture d'alimentation est incessante elle pourra clignoter en rouge par exemple.

Ainsi l'utilisateur a à sa disposition un grand nombre d'informations et un simple coup d'oeil à l'appareil 101 permet d'obtenir ces informations. De plus l'obtention de ces informations est donc totalement silencieuse.

On remarque que s'il n'a été question dans la description que de rétro-éclairer un écran, cela n'a pas de caractère limitatif. Il est en effet possible sur de nombreux appareils de rétro-éclairer un clavier par exemple. De même il est possible que le guide (104) de lumière connecté à la source 103 comporte plusieurs branches dont l'une sert à réaliser un indicateur lumineux sur une face de l'appareil. Il est possible d'utiliser l'enseignement de l'invention dans ces cas aussi, et ce même si aucun guide de lumière n'est utilisé.

## Revendications

1. Procédé de rétro-éclairage d'un appareil (101) électronique autonome **caractérisé en ce que** :
- on reçoit (401; 501, 601, 701, 801) sur l'appareil un stimulus électrique extérieur à l'appareil,
- on module (403, 503, 603, 703, 803), pour avertir de la détection par l'appareil du stimulus, le rétro-éclairage (103 - 105), en intensité et/ou en couleur, de l'appareil en fonction de ce stimulus.

2. Procédé selon la revendication 1, **caractérisé en ce que** :
- on détecte (701) qu'un périphérique est connecté à l'appareil autonome,
- on module (703) l'éclairage en fonction du périphérique.

3. Procédé selon l'une des revendications 1 ou 2, **caractérisé en ce que** l'appareil comporte des moyens (116, 114) de communication de type téléphonie mobile :
- on détermine (502) l'origine d'une communication entrante,
- on module (503) le rétro-éclairage en fonction de l'origine de la communication entrante et d'un paramétrage du téléphone.

4. Procédé selon l'une des revendications 1 à 3, **caractérisé en ce que** l'appareil comporte des moyens de communication de type téléphonie mobile :
- on détermine la nature d'une communication entrante,
- on module le rétro-éclairage en fonction de la nature de la communication entrante et d'un paramétrage du téléphone.

5. Procédé selon 'lune des revendications 1 à 4, **caractérisé en ce que** :
- on reçoit (601) un message dans l'appareil;
- on recherche (602) un mot dans le message reçu,
- on module (603) l'éclairage en fonction du résultat de la recherche.

6. Procédé selon l'une des revendications 1 à 5, **caractérisé en ce que** :
- on associe (109, 112, 201-204) une modulation de couleur et un stimulus via un mémoire de paramétrage.

7. Appareil (101) électronique autonome comportant des moyens de rétro-éclairage multicolore **caractérisé en ce qu'**il comporte des moyens (103, 107, 108, 106) pour moduler, en intensité et/ou en couleur, les moyens de rétro-éclairage en fonction d'un stimulus électrique extérieur à l'appareil.

8. Appareil selon la revendication 7 **caractérisé en ce que** les moyens de rétro-éclairage comportent des diodes, de préférence 3 rouge (117R) verte (117V) et bleue (117B), modulées en intensité et dont les énergies lumineuses qu'elles émettent sont mélangées pour produire une couleur utilisée pour le rétro-éclairage.

9. Appareil selon la revendication 7 **caractérisé en ce que** les moyens de rétro-éclairage comportent films électroluminescents (304 - 306), de préférence 3 rouge, vert et bleue, modulés en intensité et dont les énergies lumineuses qu'ils émettent sont mélangées pour produire une couleur utilisée pour le rétro-éclairage.

10. Appareil selon l'une des revendications 7 à 9, **caractérisé en ce qu'**il comporte une mémoire (109, 112, 201-204) pour associer une modulation de couleur et un stimulus extérieur.
